(19) **Europäisches Patentamt / European Patent Office / Office européen des brevets**

(11) **EP 3 091 504 A1**

(12) **EUROPEAN PATENT APPLICATION**
published in accordance with Art. 153(4) EPC

(43) Date of publication:
**09.11.2016 Bulletin 2016/45**

(51) Int Cl.:
**G06T 5/00** (2006.01)

(21) Application number: **15743853.2**

(22) Date of filing: **08.01.2015**

(86) International application number:
**PCT/CN2015/070340**

(87) International publication number:
**WO 2015/113459 (06.08.2015 Gazette 2015/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.01.2014 CN 201410042340**

(71) Applicant: **Huawei Technologies Co., Ltd.**
**Longgang District**
**Shenzhen, Guangdong 518129 (CN)**

(72) Inventors:
- **WANG, Hao**
  **Shenzhen**
  **Guangdong 518129 (CN)**
- **LUO, Wei**
  **Shenzhen**
  **Guangdong 518129 (CN)**

(74) Representative: **Gill Jennings & Every LLP**
**MXL**
**The Broadgate Tower**
**20 Primrose Street**
**London EC2A 2ES (GB)**

(54) **IMAGE PROCESSING METHOD AND ELECTRONIC DEVICE**

(57) Embodiments of the present invention provide an image processing method and an electronic device. The method includes: acquiring a value of a first factor of a first image, an average value of the first factor of the first image, and a value of a standard deviation of the first factor of the first image; acquiring a value of a first factor of a to-be-processed second image, an average value of the first factor of the second image, and a value of a standard deviation of the first factor of the second image; acquiring a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image; and generating a third image according to the value of the new first factor of the second image. Therefore, a user can perform personalized image processing according to an intent of the user, an image processing manner is expanded, image processing efficiency is improved, and user experience is improved.

Acquire a value of a first factor of a first image, and acquire an average value of the first factor of the first image and a value of a standard deviation of the first factor of the first image according to the value of the first factor of the first image — 101

Acquire a value of a first factor of a to-be-processed second image, and acquire an average value of the first factor of the second image and a value of a standard deviation of the first factor of the second image according to the value of the first factor of the second image — 102

Acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image — 103

Generate a third image according to the value of the new first factor of the second image, where an average value of a first factor of the third image is equal to the average value of the first factor of the first image, and a value of a standard deviation of the first factor of the third image is equal to the value of the standard deviation of the first factor of the first image — 104

FIG. 1

EP 3 091 504 A1

**Description**

**TECHNICAL FIELD**

The present invention relates to the field of image processing, and in particular, to an image processing method and an electronic device.

**BACKGROUND**

With popularization of a camera phone and acceptance and appreciation of a social network by more users, photo sending has become a necessary function for both tools: a photographing application and a social application.
In addition to meeting a basic function of "taking a photo", a photographing tool and the social application further provide a photo beautification tool. Filters of various styles may implement a special effect such as "high exposure" or "an old photo", which are very popular among the users.
With popularization of digital photography, an effect of a physical filter may also be achieved by processing a digital photo by using a computer-generated image processing algorithm. For example, applying a graying algorithm to a color image may change the color image to a grayscale image, thereby achieving a black-and-white photo effect; and performing Gaussian filtering on an image may achieve a blur effect.
At present, both a popular photographing application and a popular social application provide a filter function in a manner of providing several preset effects and presenting the effects to a user by means of "effect example thumbnail + name" for the user to select. After the user selects a filter, an image starts to be processed by using a preset algorithm and a preset parameter, and a result is presented to the user. The user may perform a subsequent operation such as storing or sharing the result.
Generally, various filters available for the user are preset in an application. From a technical perspective, each filter corresponds to a type of image processing algorithm and a set of parameters. The application incorporates all special effect filters. The user can only passively accept a limited quantity of special effect filters provided by the application, and can perform only a "selection" operation. The user cannot give any expression of creativity and a subjective intent.

**SUMMARY**

Embodiments of the present invention provide an image processing method, so as to resolve a problem of how a user may perform personalized image processing as desired.
According to a first aspect, an image processing method is provided, where the method includes:

acquiring a value of a first factor of a first image, and acquiring an average value of the first factor of the first image and a value of a standard deviation of the first factor of the first image according to the value of the first factor of the first image;
acquiring a value of a first factor of a to-be-processed second image, and acquiring an average value of the first factor of the second image and a value of a standard deviation of the first factor of the second image according to the value of the first factor of the second image;
acquiring a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image; and
generating a third image according to the value of the new first factor of the second image, wherein an average value of a first factor of the third image is equal to the average value of the first factor of the first image, and a value of a standard deviation of the first factor of the third image is equal to the value of the standard deviation of the first factor of the first image;

wherein the first factor comprises a component L, a component $\alpha$, and a component $\beta$ that are of each pixel of an image; or the first factor comprises a red component r, a blue component b, and a green component g that are of each pixel of an image.
With reference to the first aspect, in a first possible implementation manner of the first aspect, the acquiring a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image comprises:

performing subtraction on the value of the first factor of the second image and the average value of the first factor of the second image to acquire a first value;

performing division on the value of the standard deviation of the first factor of the first image and the value of the standard deviation of the first factor of the second image to acquire a second value;

multiplying the first value and the second value to acquire a third value; and

adding the third value and the average value of the first factor of the second image to acquire a value of the new first factor of the second image.

With reference to the first possible implementation manner of the first aspect, in a second possible implementation manner of the first aspect, the acquiring a value of a first factor of a first image, and acquiring an average value of the first factor of the first image and a value of a standard deviation of the first factor of the first image according to the value of the first factor of the first image comprises:

acquiring a component L, a component $\alpha$, and a component $\beta$ that are of each pixel of the first image; and

acquiring, according to the component L, the component $\alpha$, and the component $\beta$ that are of each pixel of the first image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the first image;

the acquiring a value of a first factor of a to-be-processed second image, and acquiring an average value of the first factor of the second image and a value of a standard deviation of the first factor of the second image according to the value of the first factor of the second image comprises:

acquiring a component L, a component $\alpha$, and a component $\beta$ that are of each pixel of the to-be-processed second image; and

acquiring, according to the component L, the component $\alpha$, and the component $\beta$ that are of each pixel of the to-be-processed second image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the second image; and

the performing subtraction on the value of the first factor of the second image and the average value of the first factor of the second image to acquire a first value; performing division on the value of the standard deviation of the first factor of the first image and the value of the standard deviation of the first factor of the second image to acquire a second value; multiplying the first value and the second value to acquire a third value; and adding the third value and the average value of the first factor of the second image to acquire a value of the new first factor of the second image comprises:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1;$$

wherein

L1 is used to indicate the component L of the first image, $\alpha1$ is used to indicate the component $\alpha$ of the first image, and $\beta1$ is used to indicate the component $\beta$ of the first image;

mL1 is used to indicate the average value of the component L of the first image, sL1 is used to indicate the value of the standard deviation of the component L of the first image, $m\alpha1$ is used to indicate the average value of the component $\alpha$ of the first image, $s\alpha1$ is used to indicate the value of the standard deviation of the component $\alpha$ of the first image, $m\beta1$ is used to indicate the average value of the component $\beta$ of the first image, and $s\beta1$ is used to

indicate the value of the standard deviation of the component β of the first image;

L2 is used to indicate the component L of the second image, α2 is used to indicate the component α of the second image, and β2 is used to indicate the component β of the second image; and

mL2 is used to indicate the average value of the component L of the second image, sL2 is used to indicate the value of the standard deviation of the component L of the second image, mα2 is used to indicate the average value of the component α of the second image, sα2 is used to indicate the value of the standard deviation of the component α of the second image, mβ2 is used to indicate the average value of the component β of the second image, and sβ2 is used to indicate the value of the standard deviation of the component β of the second image.

With reference to the second possible implementation manner of the first aspect, in a third possible implementation manner of the first aspect, after the acquiring a value of a new first factor of the second image, the method further includes:

converting newL, newα, and newβ that are of the second image to a new red component r, a new blue component b, and a new green component g that are of the second image; and

the generating a third image according to the value of the new first factor of the second image comprises:

generating the third image according to the new red component r, the new blue component b, and the new green component g that are of the second image.

With reference to the first possible implementation manner of the first aspect, in a fourth possible implementation manner of the first aspect, the acquiring a value of a first factor of a first image, and acquiring an average value of the first factor of the first image and a value of a standard deviation of the first factor of the first image according to the value of the first factor of the first image comprises:

acquiring a component r, a component b, and a component g that are of each pixel of the first image; and
acquiring, according to the component r, the component b, and the component g that are of each pixel of the first image, an average value and a value of a standard deviation that are of the component r of the first image, an average value and a value of a standard deviation that are of the component b of the first image, and an average value and a value of a standard deviation that are of the component g of the first image;

the acquiring a value of a first factor of a to-be-processed second image, and acquiring an average value of the first factor of the second image and a value of a standard deviation of the first factor of the second image according to the value of the first factor of the second image comprises:

acquiring a component r, a component b, and a component g that are of each pixel of the to-be-processed second image; and
acquiring, according to the component r, the component b, and the component g that are of each pixel of the to-be-processed second image, an average value and a value of a standard deviation that are of a component L, an average value and a value of a standard deviation that are of a component α, and an average value and a value of a standard deviation that are of a component β, wherein the component L, the component α, and the component β are of the second image; and

the performing subtraction on the value of the first factor of the second image and the average value of the first factor of the second image to acquire a first value; performing division on the value of the standard deviation of the first factor of the first image and the value of the standard deviation of the first factor of the second image to acquire a second value; multiplying the first value and the second value to acquire a third value; and adding the third value and the average value of the first factor of the second image to acquire a value of the new first factor of the second image comprises:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

wherein

mr1 indicates an average value of a red component r of the first image; sr1 indicates a value of a standard deviation of the red component r of the first image; mb1 indicates an average value of a blue component b of the first image; sb 1 indicates a value of a standard deviation of the blue component b of the first image; mg1 indicates an average value of a green component g of the first image; and sg1 indicates a value of a standard deviation of the green component g of the first image; and

r2 indicates the component r of the second image; b2 indicates the component b of the second image; g2 indicates the component g of the second image; mr2 indicates an average value of the red component r of the second image; sr2 indicates a value of a standard deviation of the red component r of the second image; mb2 indicates an average value of the blue component b of the second image; sb2 indicates a value of a standard deviation of the blue component b of the second image; mg2 indicates an average value of the green component g of the second image; and sg2 indicates a value of a standard deviation of the green component g of the second image.

With reference to a second aspect, an electronic device for processing an image is provided, where the electronic device includes:

a first acquiring unit, configured to acquire a value of a first factor of a first image, and acquire an average value of the first factor of the first image and a value of a standard deviation of the first factor of the first image according to the value of the first factor of the first image;

a second acquiring unit, configured to acquire a value of a first factor of a to-be-processed second image, and acquire an average value of the first factor of the second image and a value of a standard deviation of the first factor of the second image according to the value of the first factor of the second image;

a third acquiring unit, configured to acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image; and

a generating unit, configured to generate a third image according to the value of the new first factor, wherein an average value of a first factor of the third image is equal to the average value of the first factor of the first image, and a value of a standard deviation of the first factor of the third image is equal to the value of the standard deviation of the first factor of the first image;

wherein the first factor comprises a component L, a component $\alpha$, and a component $\beta$ that are of each pixel of an image; or the first factor comprises a red component r, a blue component b, and a green component g that are of each pixel of an image.

With reference to the second aspect, in a first possible implementation manner of the second aspect, the third acquiring unit is specifically configured to execute the following programs:

performing subtraction on the value of the first factor of the second image and the average value of the first factor of the second image to acquire a first value;

performing division on the value of the standard deviation of the first factor of the first image and the value of the standard deviation of the first factor of the second image to acquire a second value;

multiplying the first value and the second value to acquire a third value; and

adding the third value and the average value of the first factor of the second image to acquire a value of the new first factor of the second image.

With reference to the first possible implementation manner of the second aspect, in a second possible implementation manner of the second aspect, the first acquiring unit is specifically configured to:

acquire a component L, a component $\alpha$, and a component $\beta$ that are of each pixel of the first image; and acquire, according to the component L, the component $\alpha$, and the component $\beta$ that are of each pixel of the first image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the first image; and

the second acquiring unit is specifically configured to:

acquire a component L, a component $\alpha$, and a component $\beta$ that are of each pixel of the to-be-processed second image; and
acquire, according to the component L, the component $\alpha$, and the component $\beta$ that are of each pixel of the to-be-processed second image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the second image; and

the third acquiring unit is specifically configured to execute the following programs to acquire a value of the new first factor of the second image:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1;$$

wherein

L1 is used to indicate the component L of the first image, $\alpha1$ is used to indicate the component $\alpha$ of the first image, and $\beta1$ is used to indicate the component $\beta$ of the first image;
mL1 is used to indicate the average value of the component L of the first image, sL1 is used to indicate the value of the standard deviation of the component L of the first image, $m\alpha1$ is used to indicate the average value of the component $\alpha$ of the first image, $s\alpha1$ is used to indicate the value of the standard deviation of the component $\alpha$ of the first image, $m\beta1$ is used to indicate the average value of the component $\beta$ of the first image, and $s\beta1$ is used to indicate the value of the standard deviation of the component $\beta$ of the first image;
L2 is used to indicate the component L of the second image, $\alpha2$ is used to indicate the component $\alpha$ of the second image, and $\beta2$ is used to indicate the component $\beta$ of the second image; and
mL2 is used to indicate the average value of the component L of the second image, sL2 is used to indicate the value of the standard deviation of the component L of the second image, $m\alpha2$ is used to indicate the average value of the component $\alpha$ of the second image, $s\alpha2$ is used to indicate the value of the standard deviation of the component $\alpha$ of the second image, $m\beta2$ is used to indicate the average value of the component $\beta$ of the second image, and $s\beta2$ is used to indicate the value of the standard deviation of the component $\beta$ of the second image.

With reference to the second possible implementation manner of the second aspect, in a third possible implementation manner of the second aspect, the electronic device further includes a conversion generating unit, where the conversion generating unit is specifically configured to:

convert newL, new$\alpha$, and new$\beta$ that are of the second image to a new red component r, a new blue component b, and a new green component g that are of the second image; and

the generating unit is specifically configured to:

generate the third image according to the new red component r, the new blue component b, and the new green component g that are of the second image.

With reference to the first possible implementation manner of the second aspect, in a fourth possible implementation manner of the second aspect, the first acquiring unit is configured to:

acquire a component r, a component b, and a component g that are of each pixel of the first image; and
acquire, according to the component r, the component b, and the component g that are of each pixel of the first image, an average value and a value of a standard deviation that are of the component r of the first image, an average value and a value of a standard deviation that are of the component b of the first image, and an average value and a value of a standard deviation that are of the component g of the first image; and

the second acquiring unit is configured to:

acquire a component r, a component b, and a component g that are of each pixel of the to-be-processed second image; and
acquire, according to the component r, the component b, and the component g that are of each pixel of the to-be-processed second image, an average value and a value of a standard deviation that are of a component L, an average value and a value of a standard deviation that are of a component $\alpha$, and an average value and a value of a standard deviation that are of a component $\beta$, wherein the component L, the component $\alpha$, and the component $\beta$ are of the second image; and

the third acquiring unit is specifically configured to execute the following programs to acquire a value of the new first factor of the second image:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

wherein

mr1 indicates an average value of a red component r of the first image; sr1 indicates a value of a standard deviation of the red component r of the first image; mb1 indicates an average value of a blue component b of the first image; sb 1 indicates a value of a standard deviation of the blue component b of the first image; mg1 indicates an average value of a green component g of the first image; and sg1 indicates a value of a standard deviation of the green component g of the first image; and
r2 indicates the component r of the second image; b2 indicates the component b of the second image; g2 indicates the component g of the second image; mr2 indicates an average value of the red component r of the second image; sr2 indicates a value of a standard deviation of the red component r of the second image; mb2 indicates an average value of the blue component b of the second image; sb2 indicates a value of a standard deviation of the blue component b of the second image; mg2 indicates an average value of the green component g of the second image; and sg2 indicates a value of a standard deviation of the green component g of the second image.

The embodiments of the present invention provide an image processing method. A first factor of a first image and a first factor of a to-be-processed second image are acquired, a new first factor of the second image is acquired according to calculation of an average value and a standard deviation that are of the first factor of the first image and an average value and a standard deviation that are of the first factor of the to-be-processed second image, and a third image is generated according to the new first factor. Therefore, a user can perform personalized image processing according to an intent of the user, an image processing manner is expanded, image processing efficiency is improved, and user experience is improved.

**BRIEF DESCRIPTION OF DRAWINGS**

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of an image processing method according to an embodiment of the present invention;

FIG. 2 is a flowchart of a method for acquiring a first factor of a first image according to an embodiment of the present invention;

FIG. 3 is a schematic diagram of a method for converting r, g, and b to L, alpha, and beta according to an embodiment of the present invention;

FIG. 4 is a flowchart of an image processing method according to an embodiment of the present invention;

FIG. 5 is a flowchart of a method for converting L, alpha, and beta to r, g, and b according to an embodiment of the present invention;

FIG. 6 is a flowchart of a method for acquiring r, g, and b that are of a first image according to an embodiment of the present invention;

FIG. 7 is a flowchart of an image processing method according to an embodiment of the present invention;

FIG. 8 is a structural diagram of an electronic device for processing an image according to an embodiment of the present invention; and

FIG. 9 is a structural diagram of an electronic device for processing an image according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

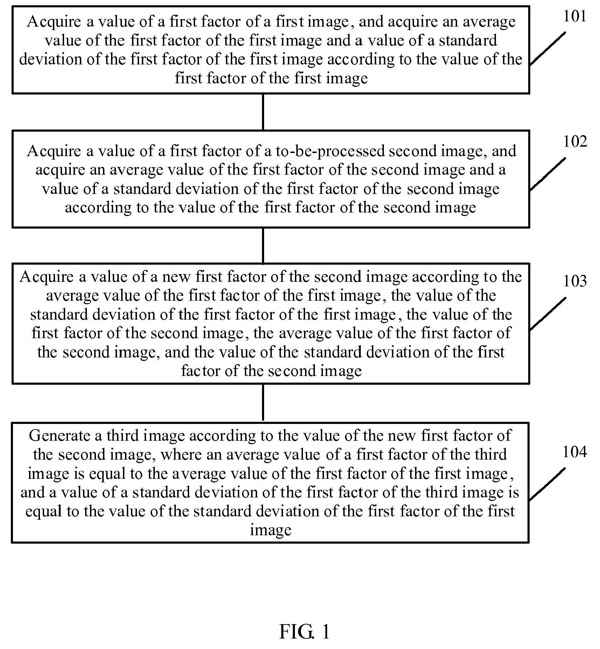

Referring to FIG. 1, FIG. 1 is a flowchart of an image processing method according to an embodiment of the present invention. As shown in FIG. 1, the method includes the following steps:

Step 101: Acquire a value of a first factor of a first image, and acquire an average value of the first factor of the first image and a value of a standard deviation of the first factor of the first image according to the value of the first factor of the first image.

Specifically, the first image may include multiple pixels, and each pixel may be expressed as a component L, a component $\alpha$, and a component $\beta$, or a component r, a component b, and a component g. The acquiring an average value and a standard deviation that are of the first factor of the first image means that: according to a value of the component L, a value of the component $\alpha$, and a value of the component $\beta$ that are of each pixel of the first image, or a value of the component r, a value of the component b, and a value of the component g that are of each pixel of the first image, an average value and a standard deviation that are of a value of a component L, an average value and a standard deviation that are of a value of a component $\alpha$, and an average value and a standard deviation that are of a value of a component $\beta$ are separately acquired, or an average value and a standard deviation that are of a value of a component r, an average value and a standard deviation that are of a value of a component b, and an average value and a standard deviation that are of a value of a component g are separately acquired, where the component L, the component $\alpha$, the component $\beta$, the component r, the component b, and the component g are of all pixels of the first image. Using an example of acquiring the average value of the component L of the first image, the value of the component L of each pixel in the first image is acquired, and according to a formula for calculating an average value, that is, average value = (x1 + x2 + x3 + ... + xn)/N, the average value of the component L of the first image is acquired. By analogy, a corresponding average value or a corresponding standard deviation that is of another component of the first image may be calculated.

The first factor comprises a component L, a component $\alpha$, and a component $\beta$ that are of each pixel of an image; or the first factor comprises a red component r, a blue component b, and a green component g that are of each pixel of an image.

A method for calculating the average value is:

**[0034]** A method for calculating the average value is: average value = (x1 + x2 + x3 + … + xn)/N.

A method for calculating the standard deviation is as follows:

In a case in which the first factor comprises the component L, the component $\alpha$, and the component $\beta$ that are of each pixel of an image, the component L, the component $\alpha$, and the component $\beta$ need to be converted to the red component r, the blue component b, and the green component g that are of the image. The image is generated by using the red component r, the blue component b, and the green component g that are of the image.

L, $\alpha$, and $\beta$ are a kind of color space having three components, which are respectively L, $\alpha$, and $\beta$. For most natural scene images, the color space features a minimum correlation between these three components. An RGB color mode is a color standard in industries, where r represents a red (Red) component, g represents a green (Green) component, and b represents a blue (Blue) component. A color of each pixel in an image is a color presented by overlaying the red component, the green component, and the blue component of this pixel according to an intensity value. An intensity value range of each component is [0,255].

Step 102: Acquire a value of a first factor of a to-be-processed second image, and acquire an average value of the first factor of the second image and a value of a standard deviation of the first factor of the second image according to the value of the first factor of the second image.

Similarly, the value of the first factor of the second image, the average value of the first factor of the second image, and the standard deviation of the first factor of the second image may be acquired. The second image is a to-be-processed image, that is, an image that needs to be processed according to a filter.

Step 103: Acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image.

Specifically, according to the average value and the standard deviation that are of the first factor of the first image, that is, average values and standard deviations that are of the component L, the component $\alpha$, and the component $\beta$, or average values and standard deviations that are of a red component r, of a blue component b, and of a green component g, where the component L, the component $\alpha$, the component $\beta$, the red component r, the blue component b, and the green component g are of each pixel of the first image; and according to the value of the first factor of the second image, and the average value and the standard deviation that are of the first factor of the second image, that is, average values and standard deviations that are of a component L, a component $\alpha$, and a component $\beta$, or average values and standard deviations that are of a red component r, a blue component b, and a green component g, where the component L, the component $\alpha$, the component $\beta$, the red component r, the blue component b, and the green component g are of each pixel of the second image, the new first factor of the second image may be acquired, and a component L, a component $\alpha$, and a component $\beta$ that are of each new pixel of the second image, or a red component r, a blue component b, and a green component g that are of each new pixel are acquired.

Optionally, the acquiring a new first factor of the second image, where the new first factor is used to generate a third image, an average value of a first factor of the third image is equal to the average value of the first factor of the first image, and a standard deviation of the first factor of the third image is equal to the standard deviation of the first factor of the first image includes:

performing subtraction on the value of the first factor of the second image and the average value of the first factor of the second image to acquire a first value;
performing division on the value of the standard deviation of the first factor of the first image and the value of the standard deviation of the first factor of the second image to acquire a second value;
multiplying the first value and the second value to acquire a third value; and
adding the third value and the average value of the first factor of the second image to acquire a value of the new first factor of the second image.

Specifically, when the first factor is the component L, the component $\alpha$, and the component $\beta$ that are of each pixel of an image, available formulas are expressed as follows:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1;$$

where

L1 is used to indicate the value of the component L of the first image, $\alpha1$ is used to indicate the value of the component $\alpha$ of the first image, and $\beta1$ is used to indicate the value of the component $\beta$ of the first image;
mL1 is used to indicate the average value of the component L of the first image, sL1 is used to indicate the value of the standard deviation of the component L of the first image, $m\alpha1$ is used to indicate the average value of the component $\alpha$ of the first image, $s\alpha1$ is used to indicate the value of the standard deviation of the component $\alpha$ of the first image, $m\beta1$ is used to indicate the average value of the component $\beta$ of the first image, and $s\beta1$ is used to indicate the value of the standard deviation of the component $\beta$ of the first image;
L2 is used to indicate the value of the component L of the second image, $\alpha2$ is used to indicate the value of the component $\alpha$ of the second image, and $\beta2$ is used to indicate the value of the component $\beta$ of the second image; and
mL2 is used to indicate the average value of the component L of the second image, sL2 is used to indicate the value of the standard deviation of the component L of the second image, $m\alpha2$ is used to indicate the average value of the component $\alpha$ of the second image, $s\alpha2$ is used to indicate the value of the standard deviation of the component $\alpha$ of the second image, $m\beta2$ is used to indicate the average value of the component $\beta$ of the second image, and $s\beta2$ is used to indicate the value of the standard deviation of the component $\beta$ of the second image.

It may be learned, according to calculation by means of substituting newL, new$\alpha$, and new$\beta$ into a formula: average value = (x1 + x2 + x3 + ... + xn)/N, that average values of a component L, a component $\alpha$, and a component $\beta$ that are of the third image are equal to average values of the component L, the component $\alpha$, and the component $\beta$ that are of the first image.

In addition, it may be learned, according to calculation by means of substituting the newL, the new$\alpha$, and the new$\beta$ into a standard deviation calculation formula, that the value of the standard deviations of the component L, the component $\alpha$, and the component $\beta$ that are of the third image are equal to the value of the standard deviations of the component L, the component $\alpha$, and the component $\beta$ that are of the first image.

Alternatively, specifically, when the first factor is the red component r, the blue component b, and the green component g that are of each pixel of an image, available formulas are expressed as follows:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

where

mr1 indicates an average value of a red component r of the first image; sr1 indicates a value of a standard deviation of the red component r of the first image; mb1 indicates an average value of a blue component b of the first image; sb 1 indicates a value of a standard deviation of the blue component b of the first image; mg1 indicates an average value of a green component g of the first image; and sg1 indicates a value of a standard deviation of the green component g of the first image; and

r2 indicates the value of the component r of the second image; b2 indicates the value of the component b of the second image; g2 indicates the value of the component g of the second image; mr2 indicates an average value of the red component r of the second image; sr2 indicates a value of a standard deviation of the red component r of the second image; mb2 indicates an average value of the blue component b of the second image; sb2 indicates a value of a standard deviation of the blue component b of the second image; mg2 indicates an average value of the green component g of the second image; and sg2 indicates a value of a standard deviation of the green component g of the second image.

It may be learned, according to calculation by means of substituting newr, newg, and newb into a formula: average value = (x1 +x2+ x3 + ... + xn)/N, that average values of a component r, a component g, and a component b that are of the third image are equal to average values of the component L, the component α, and the component β that are of the first image.

In addition, it may be learned, according to calculation by means of substituting the newr, the newg, and the newb into a standard deviation calculation formula, that the value of the standard deviations of the component r, the component g, and the component b that are of the third image are equal to the value of the standard deviations of the component r, the component g, and the component b that are of the first image.

Step 104: Generate a third image according to the value of the new first factor of the second image, where an average value of a first factor of the third image is equal to the average value of the first factor of the first image, and a value of a standard deviation of the first factor of the third image is equal to the value of the standard deviation of the first factor of the first image.

Specifically, the new first factor of the second image is acquired, where the new first factor includes a component L, a component α, and a component β that are of each new pixel of the second image, or a red component r, a blue component b, and a green component g that are of each new pixel. The third image is generated according to the value of the new first factor of the second image.

This embodiment of the present invention provides an image processing method. A value of a first factor of a first image and a value of a first factor of a to-be-processed second image are acquired, a value of a new first factor of the second image is acquired according to calculation of an average value and a value of a standard deviation that are of the first factor of the first image and an average value and a value of a standard deviation that are of the first factor of the to-be-processed second image, and a third image is generated according to the new first factor. Therefore, a user can perform personalized image processing according to an intent of the user, an image processing manner is expanded, image processing efficiency is improved, and user experience is improved.

In an implementation manner of this embodiment of the present invention, the acquiring value of a first factor of a first image, and acquiring an average value of the first factor of the first image and a value of a standard deviation of the first factor of the first image according to the value of a first factor of the first image includes:

acquiring a component L, a component α, and a component β that are of each pixel of the first image; and acquiring, according to the component L, the component α, and the component β that are of each pixel of the first image, an average value and a standard deviation that are of the component L, an average value and a standard deviation that are of the component α, and an average value and the average value that are of the component β, where the component L, the component α, and the component β are of the first image.

The acquiring a value of a first factor of a to-be-processed second image, and acquiring an average value of the first factor of the second image and a value of a standard deviation of the first factor of the second image according to the value of the first factor of the second image includes:

acquiring a component L, a component α, and a component β that are of each pixel of the to-be-processed second image; and acquiring, according to the component L, the component α, and the component β that are of each pixel of the to-be-processed second image, an average value and a standard deviation that are of the component L, an average value and a standard deviation that are of the component α, and an average value and the average value that are of the component β, where the component L, the component α, and the component β are of the second image.

The performing subtraction on the value of the first factor of the second image and the average value of the first factor of the second image to acquire a first value; performing division on the value of the standard deviation of the first factor of the first image and the value of the standard deviation of the first factor of the second image to acquire a second value; multiplying the first value and the second value to acquire a third value; and adding the third value and the average value of the first factor of the second image to acquire the value of the new first factor of the second image, where the new first factor of the second image is used to generate a third image, includes:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1$$

Further, after the acquiring a value of the new first factor of the second image, the method further includes:

converting newL, new$\alpha$, and new$\beta$ that are of the second image to a new red component r, a new blue component b, and a new green component g that are of the second image; and
generating the second image according to the red component r, the blue component b, and the green component g that are of the second image.

In another implementation manner of this embodiment of the present invention, the acquiring a value of a first factor of a first image, and acquiring an average value of the first factor of the first image and a value of a standard deviation of the first factor of the first image according to the value of the first factor of the first image includes:

acquiring a component r, a component b, and a component g that are of each pixel of the first image; and
acquiring, according to the component r, the component b, and the component g that are of each pixel of the first image, an average value and a standard deviation that are of the component r of the first image, an average value and a standard deviation that are of the component b of the first image, and an average value and a standard deviation that are of the component g of the first image.

The acquiring a value of a first factor of a to-be-processed second image, and acquiring an average value of the first factor of the second image and a value of a standard deviation of the first factor of the second image according to the value of the first factor of the second image includes:

acquiring a component r, a component b, and a component g that are of each pixel of the to-be-processed second image; and
acquiring, according to the component r, the component b, and the component g that are of each pixel of the to-be-processed second image, an average value and a standard deviation that are of a component L, an average value and a standard deviation that are of a component $\alpha$, and an average value and the average value that are of a component $\beta$, where the component L, the component $\alpha$, and the component $\beta$ are of the second image.

The performing subtraction on the value of the first factor of the second image and the average value of the first factor of the second image to acquire a first value; performing division on the value of the standard deviation of the first factor of the first image and the value of the standard deviation of the first factor of the second image to acquire a second value; multiplying the first value and the second value to acquire a third value; and adding the third value and the average value of the first factor of the second image to acquire a value of the new first factor of the second image, where the value of the new first factor of the second image is used to generate a third image, includes:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

where

mr1 indicates an average value of a red component r of the first image; sr1 indicates a value of a standard deviation of the red component r of the first image; mb1 indicates an average value of a blue component b of the first image; sb 1 indicates a value of a standard deviation of the blue component b of the first image; mg1 indicates an average value of a green component g of the first image; and sg1 indicates a vale of a standard deviation of the green component g of the first image; and
r2 indicates the component r of the second image; b2 indicates the component b of the second image; g2 indicates the component g of the second image; mr2 indicates an average value of the red component r of the second image; sr2 indicates a value of a standard deviation of the red component r of the second image; mb2 indicates an average value of the blue component b of the second image; sb2 indicates a value of a standard deviation of the blue component b of the second image; mg2 indicates an average value of the green component g of the second image; and sg2 indicates a value of a standard deviation of the green component g of the second image.

In the foregoing embodiment of the present invention, the first image may be one image, or may be multiple images; the second image may be one image, or may be multiple images. This embodiment of the present invention sets no limitation thereto.

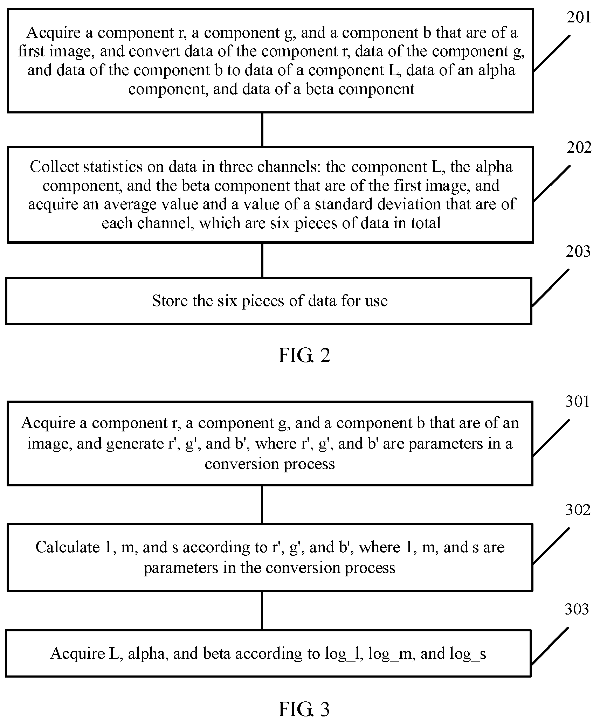

Referring to FIG. 2, FIG. 2 is a flowchart of a method for acquiring a value of a first factor of a first image according to an embodiment of the present invention. As shown in FIG. 2, the method includes the following steps:

Step 201: Acquire a component r, a component g, and a component b that are of a first image, and convert data of the component r, data of the component g, and data of the component b to data of a component L, data of an alpha component, and data of a beta component.

The first image may be a photo taken by a mobile phone, or may be a photo selected by a user from a mobile phone.

Optionally, the converting data of the component r, data of the component g, and data of the component b to data of a component L, data of an alpha component, and data of a beta component may be implemented by using the following conversion method shown in FIG. 3.

Step 202: Collect statistics on data in three channels: the component L, the alpha component, and the beta component that are of the first image, and acquire an average value and a value of a standard deviation that are of each channel, which are six pieces of data in total.
Step 203: Store the six pieces of data for use.

Specifically, an average value and a value of a standard deviation that are of the component L, an average value and a standard deviation that are of the alpha component, and an average value and a standard deviation that are of the beta component may be separately acquired by using the foregoing calculation formula, where the component L, the alpha component, and the beta component are of the first image; and the six pieces of data of the three channels are stored for use.

Specifically, referring to FIG. 3, FIG. 3 is a schematic diagram of a method for converting r, g, and b to L, alpha, and beta according to an embodiment of the present invention. FIG. 3 is only an implementation manner of this embodiment. Implementation manners of FIG. 3 are not limited to the following description, and only one of the implementation manners is illustrated in detail. As shown in FIG. 3,

Step 301: Acquire a component r, a component g, and a component b that are of an image, and generate r', g', and b', where r', g', and b' are parameters in a conversion process.

Specifically, r', g', and b' may be generated according to the following calculation manner:

$$r' = r + 1;$$

$$g' = g + 1;$$

and

$$b' = b + 1.$$

Step 302: Calculate 1, m, and s according to r', g', and b', where 1, m, and s are parameters in the conversion process, which are calculated according to the following formulas:

$$l = 0.3811 * r' + 0.5783 * g' + 0.0402 * b';$$

$$m = 0.1967 * r' + 0.7244 * g' + 0.0782 * b';$$

and

$$s = 0.0241 * r' + 0.1228 * g' + 0.8444 * b'.$$

Step 303: Take logarithms of 1, m, and s as follows:

$$\log\_l = \log10(l);$$

$$\log\_m = \log10(m);$$

and

$$\log\_s = \log10(s).$$

Step 303: Acquire L, alpha, and beta according to log_1, log_m, and log_s:

$$L = 0.5774 \, (\log\_l + \log\_m + \log\_s);$$

$$alpha = 0.4082 \, (\log\_l + \log\_m) - 0.8165 * \log\_s;$$

and

$$beta = 0.7071 \, (\log\_l - \log\_m).$$

An RGB color mode is a color standard in industries, where r represents a red (Red) component, g represents a green (Green) component, and b represents a blue (Blue) component. A color of each pixel in an image is a color presented by overlaying the red component, the green component, and the blue component of this pixel according to an intensity value. An intensity value range of each component is [0,255].

$1\alpha\beta$ is a kind of color space having three components, which are L, $\alpha$, and $\beta$, also referred to as L, alpha, and beta. For most natural scene images, the color space features a minimum correlation between these three components. Here, L1 is used to indicate a component L of a first image selected by a user, alpha1 is used to indicate a component $\alpha$ of the first image selected by the user, and beta 1 is used to indicate a component $\beta$ of the first image selected by the user; L2 is used to indicate a component L of a second image selected by the user, alpha2 is used to indicate a component $\alpha$ of the second image selected by the user, and beta2 is used to indicate a component $\beta$ of the second image selected by the user.

mL1 indicates an average value of the component L of the first image. For example, if the first image selected by the user is of 100 pixels, the component L is a matrix including 100 elements, and ml is an average value of the matrix including the 100 elements in the component L.

sL1 indicates a value of a standard deviation of the component L of the first image. For example, if the first image selected by the user is of 100 pixels, the component L is a matrix including 100 elements, and sl is a value of a standard deviation of the matrix including the 100 elements in the component L.

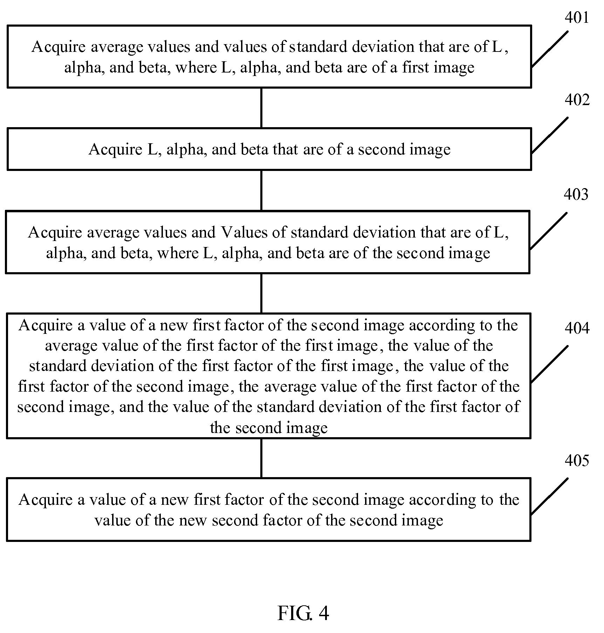

Referring to FIG. 4, FIG. 4 is a flowchart of an image processing method according to an embodiment of the present invention. FIG. 4 is a specific implementation manner of this embodiment of the present invention in a case in which the first factor is a component L, a component $\alpha$, and a component $\beta$ that are of each pixel of an image. As shown in FIG. 4, FIG. 4 is only an implementation manner of this embodiment. Implementation manners of FIG. 4 are not limited to the following description sequence of each step of FIG. 4, and only one of the implementation manners is described in detail.

Step 401: Acquire average values and values of standard deviation that are of L, alpha, and beta, where L, alpha, and beta are of a first image.

Specifically, mL1 is used to indicate the average value of the component L of the first image, sL1 is used to indicate the value of the standard deviation of the component L of the first image, $m\alpha1$ is used to indicate the average value of the component $\alpha$ of the first image, $s\alpha1$ is used to indicate the value of the standard deviation of the component $\alpha$ of the first image, $m\beta1$ is used to indicate the average value of the component $\beta$ of the first image, and $s\beta1$ is used to indicate the value of the standard deviation of the component $\beta$ of the first image.

Optionally, reference may be made to the method in the embodiment of FIG. 2. The component r, the component g, and the component b that are of the first image are acquired; data of the component r, data of the component g, and data of the component b are converted to data of the component L, data of the alpha component, and data of the beta component; and then the average values and the value of the standard deviations that are of L, alpha, and beta are acquired, where L, alpha, and beta are of the first image.

Optionally, the average values and the value of the standard deviations that are of L, alpha, and beta may also be directly acquired, where L, alpha, and beta are of the first image. For example, a component L, an alpha component, and a beta component that are of each pixel of the first image are separately acquired, and according to formulas for calculating the foregoing average value and the foregoing value of the standard deviation, the average values and the value of the standard deviations that are of L, alpha, and beta are separately acquired, where L, alpha, and beta are of the first image.

Step 402: Acquire L, alpha, and beta that are of a second image.

Specifically, L2 is used to indicate the component L of the second image, $\alpha2$ is used to indicate the component $\alpha$ of the second image, and $\beta2$ is used to indicate the component $\beta$ of the second image.

Step 403: Acquire average values and values of the standard deviation that are of L, alpha, and beta, where L, alpha, and beta are of the second image.

Specifically, mL2 is used to indicate the average value of the component L of the second image, sL2 is used to indicate the value of the standard deviation of the component L of the second image, $m\alpha2$ is used to indicate the average value of the component $\alpha$ of the second image, $s\alpha2$ is used to indicate the value of the standard deviation of the component $\alpha$ of the second image, $m\beta2$ is used to indicate the average value of the component $\beta$ of the second image, and $s\beta2$ is used to indicate the value of the standard deviation of the component $\beta$ of the second image.

For the acquiring method, reference may be made to the method in step 401 for acquiring the average values and the value of the standard deviations that are of L, alpha, and beta, where L, alpha, and beta are of the first image.

Step 404: Acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image.

Specifically, using a specific implementation manner as an example, the acquiring a value of a new first factor of the second image is not limited to the following manners:

$$newL = (L2 - mL2) * sL1/sL2 + mL1$$

$$new\alpha = (\alpha2 - m\alpha2) * s\alpha1/s\alpha2 + m\alpha1$$

$$new\beta = (\beta2 - m\beta2) * s\beta1/s\beta2 + m\beta1$$

Step 405: Acquire a value of a new first factor of the second image according to the value of the new second factor of the second image.

Further, after the acquiring a value of a new first factor of the second image, the method further includes:

converting newL, new$\alpha$, and new$\beta$ that are of the second image to a new red component r, a new blue component b, and a new green component g that are of the second image; and
generating the third image according to the new red component r, the new blue component b, and the new green component g that are of the second image.

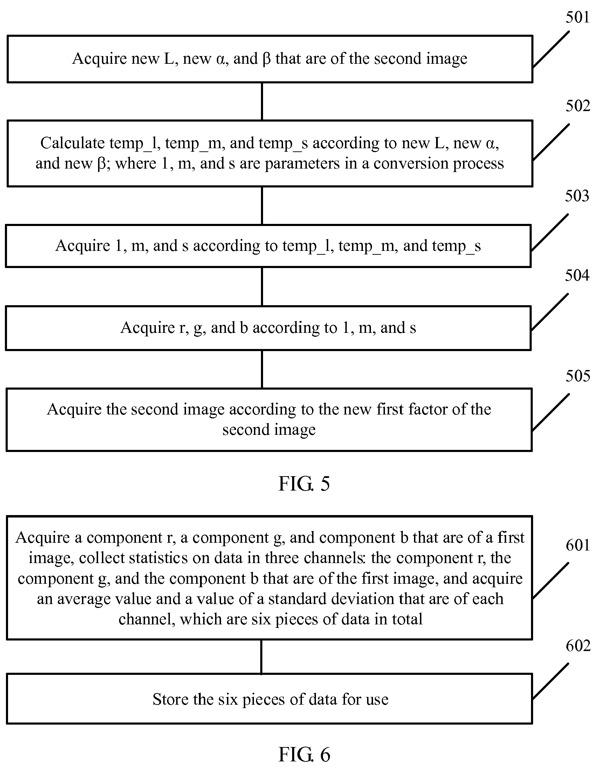

Specifically, referring to FIG. 5, FIG. 5 is a flowchart of a method for converting L, alpha, and beta to r, g, and b according to an embodiment of the present invention. FIG. 5 is only an implementation manner of this embodiment. Implementation manners of FIG. 5 are not limited to the following description, and only one of the implementation manners is described in detail. As shown in FIG. 5,

Step 501: Acquire new L, new $\alpha$, and new $\beta$ that are of the second image.
Step 502: Calculate temp_1, temp_m, and temp_s according to new L, new $\alpha$, and new $\beta$; where 1, m, and s are parameters in a conversion process.

$$\text{Specifically, temp\_1} = 0.5774 * L + 0.4082 * \alpha + 0.7071 * \beta;$$

$$temp\_m = 0.5774 * L + 0.4082 * \alpha + 0.7071 * \beta;$$

and

$$temp\_s = 0.5774 * L - 0.8165 * \alpha.$$

Step 503: Acquire 1, m, and s according to temp_1, temp_m, and temp_s.
1, m, and s are respectively indexes of temp_1, temp_m, and temp_s.
Step 504: Acquire r, g, and b according to 1, m, and s.

$$r = 4.4679 * 1 - 3.5873 * m + 0.1193 * s - 1;$$

$$g = -1.2186 * 1 + 2.3809 * m - 0.1624 * s - 1;$$

and

$$b = 0.0497 * 1 - 0.2439 * m + 1.2045 * s - 1$$

For values of r, g, and b, values less than 0 are denoted as 0; and values greater than 255 are denoted as 255.

Step 505: Acquire a third image according to the new first factor of the second image.

Specifically, the third image is generated according to new r, new g, and new b that are obtained by converting new L, new $\alpha$, and new $\beta$ that are of the second image.

Optionally, the acquiring a first factor of a first image, and acquiring an average value of the first factor of the first image and a standard deviation of the first factor of the first image according to the first factor of the first image includes:

> acquiring a component r, a component b, and a component g that are of each pixel of the first image; and
> acquiring, according to the component r, the component b, and the component g that are of each pixel of the first image, an average value and a standard deviation that are of the component r of the first image, an average value and a standard deviation that are of the component b of the first image, and an average value and a standard deviation that are of the component g of the first image.

The acquiring a first factor of a to-be-processed second image, and acquiring an average value of the first factor of the second image and a standard deviation of the first factor of the second image according to the first factor of the second image includes:

> acquiring a component r, a component b, and a component g that are of each pixel of the to-be-processed second image; and
> acquiring, according to the component r, the component b, and the component g that are of each pixel of the to-be-processed second image, an average value and a standard deviation that are of a component L, an average value and a standard deviation that are of a component $\alpha$, and an average value and the average value that are of a component $\beta$, where the component L, the component $\alpha$, and the component $\beta$ are of the second image.

The performing subtraction on the first factor of the second image and the average value of the first factor of the second image to acquire a first value; performing division on the standard deviation of the first factor of the first image and the standard deviation of the first factor of the second image to acquire a second value; multiplying the first value and the second value to acquire a third value; and adding the third value and the average value of the first factor of the second image to acquire the new first factor of the second image, where the new first factor of the second image is used to generate a third image, includes:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1$$

In another embodiment of the present invention, referring to FIG. 6, FIG. 6 is a flowchart of a method for acquiring r, g, and b that are of a first image according to an embodiment of the present invention. As shown in FIG. 6,

Step 601: Acquire a component r, a component g, and a component b that are of a first image, collect statistics on data in three channels: the component r, the component g, and the component b that are of the first image, and acquire an average value and a value of a standard deviation that are of each channel, which are six pieces of data in total.

The first image may be a photo taken by a mobile phone, or may be a photo selected by a user from a mobile phone.

Optionally, a component L, an alpha component, and a beta component that are of the first image may also be acquired, and the component L, the alpha component, and the beta component are converted to the component r, the component g, and the component b by using the foregoing conversion method shown in FIG. 5.

Step 602: Store the six pieces of data for use.

Specifically, an average value and a standard deviation that are of the component r, an average value and a standard deviation that are of the component g, and an average value and a standard deviation that are of the component b may be separately acquired by using the foregoing calculation formula, where the component r, the component g, and the component b are of the first image; and the six pieces of data of the three channels are stored for use.

mr1 indicates the average value of the component r of the first image. For example, if the first image selected by the user is of 100 pixels, the component r is a matrix including 100 elements, and mr is an average value of the matrix including the 100 elements in the component L.

sr1 indicates the standard deviation of the component r of the first image. For example, if the first image selected by the user is of 100 pixels, the component r is a matrix including 100 elements, and sr is a standard deviation of the matrix including the 100 elements in the component L.

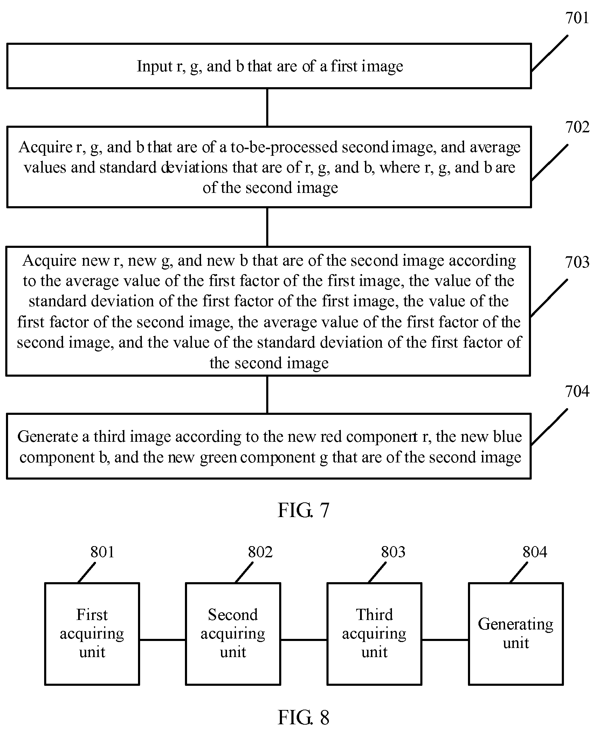

FIG. 7 is a specific implementation manner of this embodiment of the present invention in a case in which the first factor is a red component r, a blue component b, and a green component g that are of each pixel of an image.

Referring to FIG. 7, FIG. 7 is a flowchart of an image processing method according to an embodiment of the present invention. As shown in FIG. 7, FIG. 7 is only an implementation manner of this embodiment. Implementation manners of FIG. 7 are not limited to the following description sequence of each step of FIG. 7, and only one of the implementation manners is illustrated in detail.

Step 701: Acquire r, g, and b that are of a first image.

Specifically, mr1 indicates an average value of a red component r of the first image; sr1 indicates a standard deviation of the red component r of the first image; mb1 indicates an average value of a blue component b of the first image; sb1 indicates a standard deviation of the blue component b of the first image; mg1 indicates an average value of a green component g of the first image; and sg1 indicates a standard deviation of the green component g of the first image.

Optionally, the average value and the standard deviation that are of the component r, the average value and the standard deviation that are of the component g, and the average value and the standard deviation that are of the component b may be directly invoked, where the average values and the standard deviations are generated by the method in FIG. 6 and are stored, and the component r, the component g, and the component b are of the first image.

Step 702: Acquire r, g, and b that are of a to-be-processed second image, and average values and standard deviations that are of r, g, and b, where r, g, and b are of the second image.

Specifically, r2 indicates the component r of the second image; b2 indicates the component b of the second image; g2 indicates the component g of the second image; mr2 indicates an average value of the red component r of the second image; sr2 indicates a standard deviation of the red component r of the second image; mb2 indicates an average value of the blue component b of the second image; sb2 indicates a standard deviation of the blue component b of the second image; mg2 indicates an average value of the green component g of the second image; and sg2 indicates a standard deviation of the green component g of the second image.

Step 703: Acquire new r, new g, and new b that are of the second image according to the average value of the first factor of the first image, the value of the standard deviation of the first factor of the first image, the value of the first factor of the second image, the average value of the first factor of the second image, and the value of the standard deviation of the first factor of the second image.

$$\text{Specifically, } newr = (r2 - mr2) * sr1/sr2 + mr1;$$

$$newg = (g2 - mg2) * sg1/sg2 + mg1;$$

and

$$newb = (b2 - mb2) * sb1/sb2 + mb1$$

Step 704: Generate a third image according to the new red component r, the new blue component b, and the new green component g that are of the second image.

Specifically, the third image is generated according to newr, newg, and newb.

Optionally, the first image is at least one image, and the second image is at least one image.

It should be noted that a filter processing manner that is for the to-be-processed second image and that is generated by the image processing method in the embodiments described in FIG. 1 to FIG. 7 of the present invention may be shared to a server. For example, a user shares a filter processing manner of personal preference with a friend of the user by means of instant messaging such as Weibo and WeChat, so that another user may select a filter of personal preference to perform personalized image processing; therefore, an image processing manner is more diversified, image processing efficiency is further improved, and user experience is further improved.

Referring to FIG. 8, FIG. 8 is a structural diagram of an electronic device for processing an image according to an embodiment of the present invention. As shown in FIG. 8, the electronic device includes the following units: a first acquiring unit 801, a second acquiring unit 802, a third acquiring unit 803, and a generating unit 804.

The first acquiring unit 801 is configured to acquire a first factor of a first image, and acquire an average value of the first factor of the first image and a standard deviation of the first factor of the first image according to the first factor of the first image; where

the first factor is a component L, a component $\alpha$, and a component $\beta$ that are of each pixel of an image; or the first factor is a red component r, a blue component b, and a green component g that are of each pixel of an image.

A method for calculating the average value is:

**[0127]** A method for calculating the average value is: average value = $(x1 + x2 + x3 + \ldots + xn)/N$.

A method for calculating the standard deviation is as follows:

In a case in which the first factor is a component L, a component $\alpha$, and a component $\beta$ that are of each pixel of an image, the component L, the component $\alpha$, and the component $\beta$ need to be converted to the red component r, the blue component b, and the green component g that are of the image, and the red component r, the blue component b, and the green component g that are of the image are used to generate the image.

The second acquiring unit 802 is configured to acquire a first factor of a to-be-processed second image, and acquire an average value of the first factor of the second image and a standard deviation of the first factor of the second image according to the first factor of the second image.

The third acquiring unit 803 is configured to acquire a new first factor of the second image according to the average value of the first factor of the first image, the standard deviation of the first factor of the first image, the first factor of the second image, the average value of the first factor of the second image, and the standard deviation of the first factor of the second image.

The generating unit 804 is configured to generate a third image according to the new first factor, where an average value of a first factor of the third image is equal to the average value of the first factor of the first image, and a standard deviation of the first factor of the third image is equal to the standard deviation of the first factor of the first image; where

the first factor is a component L, a component $\alpha$, and a component $\beta$ that are of each pixel of an image; or the first factor is a red component r, a blue component b, and a green component g that are of each pixel of an image.

Optionally, the third acquiring unit 803 is specifically configured to:

perform subtraction on the first factor of the second image and the average value of the first factor of the second image to acquire a first value;

perform division on the standard deviation of the first factor of the first image and the standard deviation of the first factor of the second image to acquire a second value;

multiply the first value and the second value to acquire a third value; and

add the third value and the average value of the first factor of the second image to acquire the new first factor of the second image.

Specifically, expressions are as follows:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1;$$

where

L1 is used to indicate the component L of the first image, $\alpha1$ is used to indicate the component $\alpha$ of the first image, and $\beta1$ is used to indicate the component $\beta$ of the first image;

mL1 is used to indicate the average value of the component L of the first image, sL1 is used to indicate the standard deviation of the component L of the first image, $m\alpha1$ is used to indicate the average value of the component $\alpha$ of the first image, $s\alpha1$ is used to indicate the standard deviation of the component $\alpha$ of the first image, $m\beta1$ is used to indicate the average value of the component $\beta$ of the first image, and $s\beta1$ is used to indicate the standard deviation of the component $\beta$ of the first image;

L2 is used to indicate the component L of the second image, $\alpha2$ is used to indicate the component $\alpha$ of the second image, and $\beta2$ is used to indicate the component $\beta$ of the second image; and

mL2 is used to indicate the average value of the component L of the second image, sL2 is used to indicate the standard deviation of the component L of the second image, $m\alpha2$ is used to indicate the average value of the component $\alpha$ of the second image, $s\alpha2$ is used to indicate the standard deviation of the component $\alpha$ of the second image, $m\beta2$ is used to indicate the average value of the component $\beta$ of the second image, and $s\beta2$ is used to indicate the standard deviation of the component $\beta$ of the second image.

Alternatively, expressions are as follows:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

where

mr1 indicates an average value of a red component r of the first image; sr1 indicates a standard deviation of the red component r of the first image; mb1 indicates an average value of a blue component b of the first image; sb1 indicates a standard deviation of the blue component b of the first image; mg1 indicates an average value of a green component g of the first image; and sg1 indicates a standard deviation of the green component g of the first image; and

r2 indicates the component r of the second image; b2 indicates the component b of the second image; g2 indicates the component g of the second image; mr2 indicates an average value of the red component r of the second image; sr2 indicates a standard deviation of the red component r of the second image; mb2 indicates an average value of the blue component b of the second image; sb2 indicates a standard deviation of the blue component b of the second image; mg2 indicates an average value of the green component g of the second image; and sg2 indicates a standard deviation of the green component g of the second image.

Optionally, the first acquiring unit 801 is specifically configured to:

acquire a component L, a component $\alpha$, and a component $\beta$ that are of each pixel of the first image; and
acquire, according to the component L, the component $\alpha$, and the component $\beta$ that are of each pixel of the first image, an average value and a standard deviation that are of the component L, an average value and a standard deviation that are of the component $\alpha$, and an average value and the average value that are of the component $\beta$, where the component L, the component $\alpha$, and the component $\beta$ are of the first image.

The second acquiring unit 802 is specifically configured to:

acquire a component L, a component $\alpha$, and a component $\beta$ that are of each pixel of the to-be-processed second image; and
acquire, according to the component L, the component $\alpha$, and the component $\beta$ that are of each pixel of the to-be-processed second image, an average value and a standard deviation that are of the component L, an average value and a standard deviation that are of the component $\alpha$, and an average value and the average value that are of the component $\beta$, where the component L, the component $\alpha$, and the component $\beta$ are of the second image.

The third acquiring unit 803 is specifically configured to:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1$$

Optionally, the electronic device further includes a conversion generating unit, where the conversion generating unit is specifically configured to:

convert newL, new$\alpha$, and new$\beta$ that are of the second image to a new red component r, a new blue component b, and a new green component g that are of the second image; and
generate the second image according to the red component r, the blue component b, and the green component g that are of the second image.

Optionally, the first acquiring unit 801 is configured to:

acquire a component r, a component b, and a component g that are of each pixel of the first image; and
acquire, according to the component r, the component b, and the component g that are of each pixel of the first image, an average value and a standard deviation that are of the component r of the first image, an average value and a standard deviation that are of the component b of the first image, and an average value and a standard deviation that are of the component g of the first image.

The second acquiring unit 802 is configured to:

acquire a component r, a component b, and a component g that are of each pixel of the to-be-processed second image; and
acquire, according to the component r, the component b, and the component g that are of each pixel of the to-be-processed second image, an average value and a standard deviation that are of a component L, an average value and a standard deviation that are of a component $\alpha$, and an average value and the average value that are of a component $\beta$, where the component L, the component $\alpha$, and the component $\beta$ are of the second image.

The third acquiring unit 803 is specifically configured to:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1$$

The first image is at least one image, and the second image is at least one image.

For details, refer to the embodiments described in FIG. 2 to FIG. 7, and details are not described herein.

This embodiment of the present invention provides an electronic device for processing an image. The electronic device acquires a first factor of a first image and a first factor of a to-be-processed second image, acquires a new first factor of the second image according to calculation of an average value and a standard deviation that are of the first factor of the first image and an average value and a standard deviation that are of the first factor of the to-be-processed second image, and generates a third image according to the new first factor. Therefore, a user can perform personalized image processing according to an intent of the user, an image processing manner is expanded, image processing efficiency is improved, and user experience is improved.

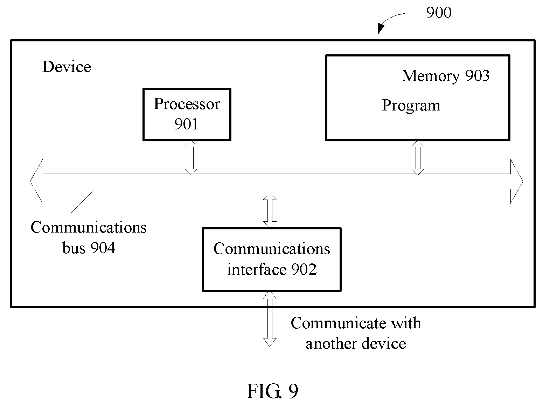

FIG. 9 is a structural diagram of an electronic device for processing an image according to an embodiment of the present invention. Referring to FIG. 9, FIG. 9 shows an electronic device 900 provided in this embodiment of the present invention, and a specific embodiment of the present invention sets no limitation on specific implementation of the electronic device. The electronic device 900 includes:

a processor (processor) 901, a communications interface (Communications Interface) 902, a memory (memory) 903, and a bus 904.

The processor 901, the communications interface 902, and the memory 903 complete mutual communication by using the bus 904.

The communications interface 902 is configured to communicate with another electronic device.

The processor 901 is configured to execute a program. The processor is a control center of the electronic device and is connected to various parts of the entire electronic device by using various interfaces and lines; and implements various functions of the electronic device and/or processes data by running or executing a software program and/or a module stored in a storage unit and invoking data stored in the storage unit. The processor may include an integrated circuit (Integrated Circuit, IC for short), for example, may include a single packaged IC, or may include multiple packaged ICs having a same function or different functions. For example, the processor may include only a central processing unit (Central Processing Unit, CPU for short), or may be a combination of a GPU, a digital signal processor (Digital Signal Processor, DSP for short), and a control chip (such as a baseband chip) in a communications unit. In this implementation manner of the present invention, the CPU may be a single computing core, or may include multiple computing cores. Specifically, the program executed by the processor may include program code, where the program code includes a computer operation instruction. The processor 901 may be a central processing unit (central processing unit, CPU) or an application-specific integrated circuit ASIC (Application Specific Integrated Circuit), or is configured as one or more integrated circuits that implement this embodiment of the present invention.

The memory 903 is configured to store a program. The memory 903 may be a volatile memory (volatile memory), such as a random-access memory (random-access memory, RAM), or a non-volatile memory (non-volatile memory), such as a read-only memory (read-only memory, ROM), a flash memory (flash memory), a hard disk drive (hard disk drive, HDD), or a solid state disk (solid-state drive, SSD). The processor 901 executes the following method according to a program instruction stored in the memory 903:

acquiring a first factor of the first image, and acquiring an average value of the first factor of the first image and a standard deviation of the first factor of the first image according to the first factor of the first image;

acquiring a first factor of a to-be-processed second image, and acquiring an average value of the first factor of the second image and a standard deviation of the first factor of the second image according to the first factor of the second image;

acquiring a new first factor of the second image according to the average value of the first factor of the first image, the standard deviation of the first factor of the first image, the first factor of the second image, the average value of the first factor of the second image, and the standard deviation of the first factor of the second image; and

generating a third image according to the new first factor of the second image, where an average value of a first factor of the third image is equal to the average value of the first factor of the first image, and a standard deviation of the first factor of the third image is equal to the standard deviation of the first factor of the first image;

where the first factor is a component L, a component $\alpha$, and a component $\beta$ that are of each pixel of an image; or the first factor is a red component r, a blue component b, and a green component g that are of each pixel of an image.

The acquiring a new first factor of the second image according to the average value of the first factor of the first image, the standard deviation of the first factor of the first image, the first factor of the second image, the average value of the first factor of the second image, and the standard deviation of the first factor of the second image includes:

performing subtraction on the first factor of the second image and the average value of the first factor of the second image to acquire a first value;

performing division on the standard deviation of the first factor of the first image and the standard deviation of the first factor of the second image to acquire a second value;

multiplying the first value and the second value to acquire a third value; and

adding the third value and the average value of the first factor of the second image to acquire the new first factor of the second image.

The acquiring a first factor of the first image, and acquiring an average value of the first factor of the first image and a standard deviation of the first factor of the first image according to the first factor of the first image includes:

acquiring a component L, a component $\alpha$, and a component $\beta$ that are of each pixel of the first image; and

acquiring, according to the component L, the component $\alpha$, and the component $\beta$ that are of each pixel of the first image, an average value and a standard deviation that are of the component L, an average value and a standard deviation that are of the component $\alpha$, and an average value and the average value that are of the component $\beta$, where the component L, the component $\alpha$, and the component $\beta$ are of the first image.

The acquiring a first factor of a to-be-processed second image, and acquiring an average value of the first factor of the second image and a standard deviation of the first factor of the second image according to the first factor of the second image includes:

acquiring a component L, a component $\alpha$, and a component $\beta$ that are of each pixel of the to-be-processed second image; and

acquiring, according to the component L, the component $\alpha$, and the component $\beta$ that are of each pixel of the to-be-processed second image, an average value and a standard deviation that are of the component L, an average value and a standard deviation that are of the component $\alpha$, and an average value and the average value that are of the component $\beta$, where the component L, the component $\alpha$, and the component $\beta$ are of the second image.

The performing subtraction on the first factor of the second image and the average value of the first factor of the second image to acquire a first value; performing division on the standard deviation of the first factor of the first image and the standard deviation of the first factor of the second image to acquire a second value; multiplying the first value and the second value to acquire a third value; and adding the third value and the average value of the first factor of the second image to acquire the new first factor of the second image includes:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1;$$

where

L1 is used to indicate the component L of the first image, $\alpha1$ is used to indicate the component $\alpha$ of the first image, and $\beta1$ is used to indicate the component $\beta$ of the first image;
mL1 is used to indicate the average value of the component L of the first image, sL1 is used to indicate the standard deviation of the component L of the first image, $m\alpha1$ is used to indicate the average value of the component $\alpha$ of the first image, $s\alpha1$ is used to indicate the standard deviation of the component $\alpha$ of the first image, $m\beta1$ is used to indicate the average value of the component $\beta$ of the first image, and $s\beta1$ is used to indicate the standard deviation of the component $\beta$ of the first image;
L2 is used to indicate the component L of the second image, $\alpha2$ is used to indicate the component $\alpha$ of the second image, and $\beta2$ is used to indicate the component $\beta$ of the second image; and
mL2 is used to indicate the average value of the component L of the second image, sL2 is used to indicate the standard deviation of the component L of the second image, $m\alpha2$ is used to indicate the average value of the component $\alpha$ of the second image, $s\alpha2$ is used to indicate the standard deviation of the component $\alpha$ of the second image, $m\beta2$ is used to indicate the average value of the component $\beta$ of the second image, and $s\beta2$ is used to indicate the standard deviation of the component $\beta$ of the second image.

After the acquiring a new first factor of the second image, the method further includes:

converting newL, new$\alpha$, and new$\beta$ that are of the second image to a new red component r, a new blue component b, and a new green component g that are of the second image; and

the generating a third image according to the new first factor of the second image includes:

generating the third image according to the new red component r, the new blue component b, and the new green component g that are of the second image.

The acquiring a first factor of the first image, and acquiring an average value of the first factor of the first image and a standard deviation of the first factor of the first image according to the first factor of the first image includes:

acquiring a component r, a component b, and a component g that are of each pixel of the first image; and acquiring, according to the component r, the component b, and the component g that are of each pixel of the first image, an average value and a standard deviation that are of the component r of the first image, an average value and a standard deviation that are of the component b of the first image, and an average value and a standard deviation that are of the component g of the first image.

The acquiring a first factor of a to-be-processed second image, and acquiring an average value of the first factor of the second image and a standard deviation of the first factor of the second image according to the first factor of the second image includes:

acquiring a component r, a component b, and a component g that are of each pixel of the to-be-processed second image; and
acquiring, according to the component r, the component b, and the component g that are of each pixel of the to-be-processed second image, an average value and a standard deviation that are of a component L, an average value and a standard deviation that are of a component $\alpha$, and an average value and the average value that are of a component $\beta$, where the component L, the component $\alpha$, and the component $\beta$ are of the second image.

The performing subtraction on the first factor of the second image and the average value of the first factor of the second image to acquire a first value; performing division on the standard deviation of the first factor of the first image and the standard deviation of the first factor of the second image to acquire a second value; multiplying the first value and the second value to acquire a third value; and adding the third value and the average value of the first factor of the second image to acquire the new first factor of the second image, where the new first factor of the second image is used to generate a third image, includes:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1; where$$

mr1 indicates an average value of a red component r of the first image; sr1 indicates a standard deviation of the red component r of the first image; mb1 indicates an average value of a blue component b of the first image; sb1 indicates a standard deviation of the blue component b of the first image; mg1 indicates an average value of a green component g of the first image; and sg1 indicates a standard deviation of the green component g of the first image; and r2 indicates the component r of the second image; b2 indicates the component b of the second image; g2 indicates the component g of the second image; mr2 indicates an average value of the red component r of the second image; sr2 indicates a standard deviation of the red component r of the second image; mb2 indicates an average value of the blue component b of the second image; sb2 indicates a standard deviation of the blue component b of the second image; mg2 indicates an average value of the green component g of the second image; and sg2 indicates a standard deviation of the green component g of the second image.

The first image is at least one image, and the second image is at least one image.

This embodiment of the present invention provides an electronic device for processing an image. The electronic device acquires a first factor of a first image and a first factor of a to-be-processed second image, acquires a new first factor of the second image according to calculation of an average value and a standard deviation that are of the first factor of the first image and an average value and a standard deviation that are of the first factor of the to-be-processed second image, and generates a third image according to the new first factor. Therefore, a user can perform personalized image processing according to an intent of the user, an image processing manner is expanded, image processing efficiency is improved, and user experience is improved.

It should be noted that mutual reference may be made to the foregoing corresponding technical features in this embodiment of the present invention.

The electronic device disclosed in the present invention may be a single apparatus, or be integrated into different apparatuses, such as a mobile telephone, a tablet personal computer (Tablet Personal Computer), a laptop computer (Laptop Computer), a multimedia player, a digital camera, a personal digital assistant (personal digital assistant, PDA for short), a navigation apparatus, a mobile internet device (Mobile Internet Device, MID for short), or a wearable device (Wearable Device).

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An image processing method, wherein the method comprises:

   Acquiring a value of a first factor of a first image, and acquiring an average value of the first factor of the first image and a value of a standard deviation of the first factor of the first image according to the value of the first factor of the first image;
   acquiring a value of a first factor of a to-be-processed second image, and acquiring an average value of the first factor of the second image and a value of a standard deviation of the first factor of the second image according to the value of the first factor of the second image;
   acquiring a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image; and

generating a third image according to the value of the new first factor of the second image, wherein an average value of a first factor of the third image is equal to the average value of the first factor of the first image, and a value of a standard deviation of the first factor of the third image is equal to the value of the standard deviation of the first factor of the first image;

wherein the first factor comprises a component L, a component $\alpha$, and a component $\beta$ that are of each pixel of an image; or the first factor comprises a red component r, a blue component b, and a green component g that are of each pixel of an image.

2. The method according to claim 1, wherein the acquiring a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image comprises:

performing subtraction on the value of the first factor of the second image and the average value of the first factor of the second image to acquire a first value;

performing division on the value of the standard deviation of the first factor of the first image and the value of the standard deviation of the first factor of the second image to acquire a second value;

multiplying the first value and the second value to acquire a third value; and

adding the third value and the average value of the first factor of the second image to acquire a value of the new first factor of the second image.

3. The method according to claim 2, wherein the acquiring a value of a first factor of a first image, and acquiring an average value of the first factor of the first image and a value of a standard deviation of the first factor of the first image according to the value of the first factor of the first image comprises:

acquiring a component L, a component $\alpha$, and a component $\beta$ that are of each pixel of the first image; and

acquiring, according to the component L, the component $\alpha$, and the component $\beta$ that are of each pixel of the first image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the first image;

the acquiring a value of a first factor of a to-be-processed second image, and acquiring an average value of the first factor of the second image and a value of a standard deviation of the first factor of the second image according to the value of the first factor of the second image comprises:

acquiring a component L, a component $\alpha$, and a component $\beta$ that are of each pixel of the to-be-processed second image; and

acquiring, according to the component L, the component $\alpha$, and the component $\beta$ that are of each pixel of the to-be-processed second image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the second image; and

the performing subtraction on the value of the first factor of the second image and the average value of the first factor of the second image to acquire a first value; performing division on the value of the standard deviation of the first factor of the first image and the value of the standard deviation of the first factor of the second image to acquire a second value; multiplying the first value and the second value to acquire a third value; and adding the third value and the average value of the first factor of the second image to acquire a value of the new first factor of the second image comprises:

$$newL = (L2 - mL2) * sL1/sL2 + mL1;$$

$$newα = (α2 − mα2) * sα1/sα2 + mα1;$$

and

$$newβ = (β2 − mβ2) * sβ1/sβ2 + mβ1;$$

wherein

L1 is used to indicate the component L of the first image, $α1$ is used to indicate the component $α$ of the first image, and $β1$ is used to indicate the component $β$ of the first image;

mL1 is used to indicate the average value of the component L of the first image, sL1 is used to indicate the value of the standard deviation of the component L of the first image, $mα1$ is used to indicate the average value of the component $α$ of the first image, $sα1$ is used to indicate the value of the standard deviation of the component $α$ of the first image, $mβ1$ is used to indicate the average value of the component $β$ of the first image, and $sβ1$ is used to indicate the value of the standard deviation of the component $β$ of the first image;

L2 is used to indicate the component L of the second image, $α2$ is used to indicate the component $α$ of the second image, and $β2$ is used to indicate the component $β$ of the second image; and

mL2 is used to indicate the average value of the component L of the second image, sL2 is used to indicate the value of the standard deviation of the component L of the second image, $mα2$ is used to indicate the average value of the component $α$ of the second image, $sα2$ is used to indicate the value of the standard deviation of the component $α$ of the second image, $mβ2$ is used to indicate the average value of the component $β$ of the second image, and $sβ2$ is used to indicate the value of the standard deviation of the component $β$ of the second image.

4. The method according to claim 3, wherein after the acquiring a value of a new first factor of the second image, the method further comprises:

converting newL, $newα$, and $newβ$ that are of the second image to a new red component r, a new blue component b, and a new green component g that are of the second image; and

the generating a third image according to the value of the new first factor of the second image comprises:

generating the third image according to the new red component r, the new blue component b, and the new green component g that are of the second image.

5. The method according to claim 2, wherein the acquiring a value of a first factor of a first image, and acquiring an average value of the first factor of the first image and a value of a standard deviation of the first factor of the first image according to the value of the first factor of the first image comprises:

acquiring a component r, a component b, and a component g that are of each pixel of the first image; and acquiring, according to the component r, the component b, and the component g that are of each pixel of the first image, an average value and a value of a standard deviation that are of the component r of the first image, an average value and a value of a standard deviation that are of the component b of the first image, and an average value and a value of a standard deviation that are of the component g of the first image;

the acquiring a value of a first factor of a to-be-processed second image, and acquiring an average value of the first factor of the second image and a value of a standard deviation of the first factor of the second image according to the value of the first factor of the second image comprises:

acquiring a component r, a component b, and a component g that are of each pixel of the to-be-processed second image; and

acquiring, according to the component r, the component b, and the component g that are of each pixel of the to-be-processed second image, an average value and a value of a standard deviation that are of a component L, an average value and a value of a standard deviation that are of a component $α$, and an average value and a value of a standard deviation that are of a component $β$, wherein the component L, the component $α$, and the component β are of the second image; and

the performing subtraction on the value of the first factor of the second image and the average value of the first factor of the second image to acquire a first value; performing division on the value of the standard deviation of the first factor of the first image and the value of the standard deviation of the first factor of the second image to acquire a second value; multiplying the first value and the second value to acquire a third value; and adding the third value and the average value of the first factor of the second image to acquire a value of the new first factor of the second image comprises:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

wherein

mr1 indicates an average value of a red component r of the first image; sr1 indicates a value of a standard deviation of the red component r of the first image; mb1 indicates an average value of a blue component b of the first image; sb1 indicates a value of a standard deviation of the blue component b of the first image; mg1 indicates an average value of a green component g of the first image; and sg1 indicates a value of a standard deviation of the green component g of the first image; and

r2 indicates the component r of the second image; b2 indicates the component b of the second image; g2 indicates the component g of the second image; mr2 indicates an average value of the red component r of the second image; sr2 indicates a value of a standard deviation of the red component r of the second image; mb2 indicates an average value of the blue component b of the second image; sb2 indicates a value of a standard deviation of the blue component b of the second image; mg2 indicates an average value of the green component g of the second image; and sg2 indicates a value of a standard deviation of the green component g of the second image.

6. An electronic device, wherein the electronic device comprises:

a first acquiring unit, configured to acquire a value of a first factor of a first image, and acquire an average value of the first factor of the first image and a value of a standard deviation of the first factor of the first image according to the value of the first factor of the first image;

a second acquiring unit, configured to acquire a value of a first factor of a to-be-processed second image, and acquire an average value of the first factor of the second image and a value of a standard deviation of the first factor of the second image according to the value of the first factor of the second image;

a third acquiring unit, configured to acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image; and

a generating unit, configured to generate a third image according to the value of the new first factor, wherein an average value of a first factor of the third image is equal to the average value of the first factor of the first image, and a value of a standard deviation of the first factor of the third image is equal to the value of the standard deviation of the first factor of the first image;

wherein the first factor comprises a component L, a component α, and a component β that are of each pixel of an image; or the first factor comprises a red component r, a blue component b, and a green component g that are of each pixel of an image.

7. The electronic device according to claim 6, wherein the third acquiring unit is specifically configured to execute the following programs:

performing subtraction on the value of the first factor of the second image and the average value of the first factor of the second image to acquire a first value;
performing division on the value of the standard deviation of the first factor of the first image and the value of the standard deviation of the first factor of the second image to acquire a second value;
multiplying the first value and the second value to acquire a third value; and
adding the third value and the average value of the first factor of the second image to acquire a value of the new first factor of the second image.

8. The electronic device according to claim 7, wherein the first acquiring unit is specifically configured to:

acquire a component L, a component $\alpha$, and a component $\beta$ that are of each pixel of the first image; and
acquire, according to the component L, the component $\alpha$, and the component $\beta$ that are of each pixel of the first image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the first image; and

the second acquiring unit is specifically configured to:

acquire a component L, a component $\alpha$, and a component $\beta$ that are of each pixel of the to-be-processed second image; and
acquire, according to the component L, the component $\alpha$, and the component $\beta$ that are of each pixel of the to-be-processed second image, an average value and a value of a standard deviation that are of the component L, an average value and a value of a standard deviation that are of the component $\alpha$, and an average value and a value of a standard deviation that are of the component $\beta$, wherein the component L, the component $\alpha$, and the component $\beta$ are of the second image; and

the third acquiring unit is specifically configured to execute the following programs to acquire a value of the new first factor of the second image:

$$newL = (L2 - mL2) * sL1/sL2 + mL1;$$

$$new\alpha = (\alpha2 - m\alpha2) * s\alpha1/s\alpha2 + m\alpha1;$$

and

$$new\beta = (\beta2 - m\beta2) * s\beta1/s\beta2 + m\beta1;$$

wherein

L1 is used to indicate the component L of the first image, $\alpha1$ is used to indicate the component $\alpha$ of the first image, and $\beta1$ is used to indicate the component $\beta$ of the first image;
mL1 is used to indicate the average value of the component L of the first image, sL1 is used to indicate the value of the standard deviation of the component L of the first image, m$\alpha1$ is used to indicate the average value of the component $\alpha$ of the first image, s$\alpha1$ is used to indicate the value of the standard deviation of the component $\alpha$ of the first image, m$\beta1$ is used to indicate the average value of the component $\beta$ of the first image, and s$\beta1$ is used to indicate the value of the standard deviation of the component $\beta$ of the first image;
L2 is used to indicate the component L of the second image, $\alpha2$ is used to indicate the component $\alpha$ of the second image, and $\beta2$ is used to indicate the component $\beta$ of the second image; and

mL2 is used to indicate the average value of the component L of the second image, sL2 is used to indicate the value of the standard deviation of the component L of the second image, m$\alpha$2 is used to indicate the average value of the component $\alpha$ of the second image, s$\alpha$2 is used to indicate the value of the standard deviation of the component $\alpha$ of the second image, m$\beta$2 is used to indicate the average value of the component $\beta$ of the second image, and s$\beta$2 is used to indicate the value of the standard deviation of the component $\beta$ of the second image.

9. The electronic device according to claim 8, wherein the electronic device further comprises a conversion unit, wherein the conversion unit is specifically configured to:

convert newL, new$\alpha$, and new$\beta$ that are of the second image to a new red component r, a new blue component b, and a new green component g that are of the second image; and

the generating unit is specifically configured to:

generate the third image according to the new red component r, the new blue component b, and the new green component g that are of the second image.

10. The electronic device according to claim 7, wherein the first acquiring unit is configured to:

acquire a component r, a component b, and a component g that are of each pixel of the first image; and acquire, according to the component r, the component b, and the component g that are of each pixel of the first image, an average value and a value of a standard deviation that are of the component r of the first image, an average value and a value of a standard deviation that are of the component b of the first image, and an average value and a value of a standard deviation that are of the component g of the first image; and

the second acquiring unit is configured to:

acquire a component r, a component b, and a component g that are of each pixel of the to-be-processed second image; and acquire, according to the component r, the component b, and the component g that are of each pixel of the to-be-processed second image, an average value and a value of a standard deviation that are of a component L, an average value and a value of a standard deviation that are of a component $\alpha$, and an average value and a value of a standard deviation that are of a component $\beta$, wherein the component L, the component $\alpha$, and the component $\beta$ are of the second image; and

the third acquiring unit is specifically configured to execute the following programs to acquire a value of the new first factor of the second image:

$$newr = (r2 - mr2) * sr1/sr2 + mr1;$$

$$newg = (g2 - mg2) * sg1/sg2 + mg1;$$

and

$$newb = (b2 - mb2) * sb1/sb2 + mb1;$$

wherein

mr1 indicates an average value of a red component r of the first image; sr1 indicates a value of a standard deviation of the red component r of the first image; mb1 1 indicates an average value of a blue component b of the first image; sb 1 indicates a value of a standard deviation of the blue component b of the first image; mg1 indicates an average value of a green component g of the first image; and sg1 indicates a value of a standard deviation of the green component g of the first image; and

r2 indicates the component r of the second image; b2 indicates the component b of the second image; g2 indicates the component g of the second image; mr2 indicates an average value of the red component r of the second image; sr2 indicates a value of a standard deviation of the red component r of the second image; mb2 indicates an average value of the blue component b of the second image; sb2 indicates a value of a standard deviation of the blue component b of the second image; mg2 indicates an average value of the green component g of the second image; and sg2 indicates a value of a standard deviation of the green component g of the second image.

| Acquire a value of a first factor of a first image, and acquire an average value of the first factor of the first image and a value of a standard deviation of the first factor of the first image according to the value of the first factor of the first image | 101 |

| Acquire a value of a first factor of a to-be-processed second image, and acquire an average value of the first factor of the second image and a value of a standard deviation of the first factor of the second image according to the value of the first factor of the second image | 102 |

| Acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image | 103 |

| Generate a third image according to the value of the new first factor of the second image, where an average value of a first factor of the third image is equal to the average value of the first factor of the first image, and a value of a standard deviation of the first factor of the third image is equal to the value of the standard deviation of the first factor of the first image | 104 |

FIG. 1

Acquire a component r, a component g, and a component b that are of a first image, and convert data of the component r, data of the component g, and data of the component b to data of a component L, data of an alpha component, and data of a beta component

201

Collect statistics on data in three channels: the component L, the alpha component, and the beta component that are of the first image, and acquire an average value and a value of a standard deviation that are of each channel, which are six pieces of data in total

202

Store the six pieces of data for use

203

FIG. 2

Acquire a component r, a component g, and a component b that are of an image, and generate r', g', and b', where r', g', and b' are parameters in a conversion process

301

Calculate 1, m, and s according to r', g', and b', where 1, m, and s are parameters in the conversion process

302

Acquire L, alpha, and beta according to log_1, log_m, and log_s

303

FIG. 3

Acquire average values and values of standard deviation that are of L, alpha, and beta, where L, alpha, and beta are of a first image

401

Acquire L, alpha, and beta that are of a second image

402

Acquire average values and Values of standard deviation that are of L, alpha, and beta, where L, alpha, and beta are of the second image

403

Acquire a value of a new first factor of the second image according to the average value of the first factor of the first image, the value of the standard deviation of the first factor of the first image, the value of the first factor of the second image, the average value of the first factor of the second image, and the value of the standard deviation of the first factor of the second image

404

Acquire a value of a new first factor of the second image according to the value of the new second factor of the second image

405

FIG. 4

Acquire new L, new α, and β that are of the second image — 501

Calculate temp_l, temp_m, and temp_s according to new L, new α, and new β; where 1, m, and s are parameters in a conversion process — 502

Acquire 1, m, and s according to temp_l, temp_m, and temp_s — 503

Acquire r, g, and b according to 1, m, and s — 504

Acquire the second image according to the new first factor of the second image — 505

**FIG. 5**

Acquire a component r, a component g, and component b that are of a first image, collect statistics on data in three channels: the component r, the component g, and the component b that are of the first image, and acquire an average value and a value of a standard deviation that are of each channel, which are six pieces of data in total — 601

Store the six pieces of data for use — 602

**FIG. 6**

701

| Input r, g, and b that are of a first image |
|---|

702

| Acquire r, g, and b that are of a to-be-processed second image, and average values and standard deviations that are of r, g, and b, where r, g, and b are of the second image |
|---|

703

| Acquire new r, new g, and new b that are of the second image according to the average value of the first factor of the first image, the value of the standard deviation of the first factor of the first image, the value of the first factor of the second image, the average value of the first factor of the second image, and the value of the standard deviation of the first factor of the second image |
|---|

704

| Generate a third image according to the new red component r, the new blue component b, and the new green component g that are of the second image |
|---|

FIG. 7

801

802

803

804

| First acquiring unit | Second acquiring unit | Third acquiring unit | Generating unit |
|---|---|---|---|

FIG. 8

900

Device

Processor
901

Memory 903

Program

Communications
bus 904

Communications
interface 902

Communicate with
another device

FIG. 9

# INTERNATIONAL SEARCH REPORT

| | International application No. |
|---|---|
| | PCT/CN2015/070340 |

### A.  CLASSIFICATION OF SUBJECT MATTER

G06T 5/00 (2006.01) i

According to International Patent Classification (IPC) or to both national classification and IPC

### B.  FIELDS SEARCHED

Minimum documentation searched (classification system followed by classification symbols)

G06T; H04N; G06F

Documentation searched other than minimum documentation to the extent that such documents are included in the fields searched

Electronic data base consulted during the international search (name of data base and, where practicable, search terms used)

CNPAT, WPI, EPODOC, CNKI: image, picture, average, mean, standard deviation, filter effects, updat+, photo, process

### C.  DOCUMENTS CONSIDERED TO BE RELEVANT

| Category* | Citation of document, with indication, where appropriate, of the relevant passages | Relevant to claim No. |
|---|---|---|
| PX | CN 103761134 A (HUAWEI TECHNOLOGIES CO LTD) 30 April 2014 (30.04.2014) the whole document | 1-10 |
| X | CN 102419867 A (DALIAN MARITIME UNIVERSITY) 18 April 2012 (18.04.2012) claim 1, description, paragraph [0049] and figures 1-3 | 1-10 |
| X | CN 101872473 A (TSINGHUA UNIVERSITY) 27 October 2010 (27.10.2010) description, paragraphs [0059]-[0062] | 1-10 |
| A | CN 102509320 A (SHENZHEN WONDERSHARE SOFTWARE CO LTD) 20 June 2012 (20.06.2012) the whole document | 1-10 |
| A | CN 102693532 A (MICROSOFT CORP.) 26 September 2012 (26.09.2012) the whole | 1-10 |
| A | US 2011135200 A1 (CHEN, CHAO-HO et al.) 09 June 2011 (09.06.2011) the whole document | 1-10 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 March 2014 | 14 April 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHANG, Liguo<br><br>Telephone No. (86-10) 61648239 |

Form PCT/ISA /210 (second sheet) (July 2009)

**INTERNATIONAL SEARCH REPORT**
Information on patent family members

International application No.

PCT/CN2015/070340

| Patent Documents referred in the Report | Publication Date | Patent Family | Publication Date |
|---|---|---|---|
| CN 103761134 A | 30 April 2014 | None | |
| CN 102419867 A | 18 April 2012 | None | |
| CN 101872473 A | 27 October 2010 | CN 101872473 B | 29 February 2012 |
| CN 102509320 A | 20 June 2012 | CN 102509320 B | 04 June 2014 |
| CN 102693532 A | 26 September 2012 | US 8644638 B2 | 04 February 2014 |
| | | US 2012219218 A1 | 30 August 2012 |
| US 2011135200 A1 | 09 June 2011 | US 8417053 B2 | 09 April 2013 |
| | | TW 201120814 A | 16 June 2011 |
| | | TW I423166 B | 11 January 2014 |

Form PCT/ISA /210 (patent family annex) (July 2009)